# EUROPEAN PATENT APPLICATION

(11) **EP 3 770 207 A1**
(43) Date of publication of application: **27.01.2021**
(21) Application number: 19771072.6
(22) Date of filing: 19.03.2019
(51) Int. Cl.: C08J 5/00, B32B 9/00, C08K 3/04, B82Y 30/00

(54) **USE OF HIGH-ASPECT-RATIO GRAPHENE MATERIALS AS ADDITIVES FOR THERMOPLASTIC MATERIALS**

(30) Priority: 23.03.2018 ES 201830285
(71) Applicant: Avanzare Innovacion Tencologica S.L., 26370 Navarette (ES)
(72) Inventor: GOMEZ CORDON, Julio, 26002 LOGROÑO (ES); PEREZ MARTINEZ, Javier, 26140 LARDERO (ES); OTAÑO JIMENEZ, Luis, 26004 LOGROÑO (ES)
(74) Representative: Balder IP Law, S.L.
(86) International application number: PCT/ES2019/070182
(87) International publication number: WO 2019/180292

(57) **Abstract**

The present invention relates to the use of graphene materials having a high aspect ratio and low thickness to improve the impact resistance, stretch or melt flow rate of thermoplastic materials, of mixtures of thermoplastic materials or of thermoplastic materials reinforced with another type of load or fibre.

A high aspect ratio improves the polymer-graphene material interface and provides a greater matrix-reinforcement interaction owing to the greater contact surface area, which allows the polymer chains to have greater freedom of movement, leading to improved impact resistance, stretch or melt flow rate, and in many cases, an improvement in two or three of said characteristics.

## Description

### THECHNICAL FIELD

The present invention relates to the use of graphene materials as additives in thermoplastic matrices which allow for an increase in at least one of the following characteristics: stretch, melt flow rate or impact resistance.

### BACKGROUND OF THE INVENTION

Graphene materials are a family of laminar, or two-dimensional, materials having a low thickness, between 1 and 10 layers, as described in the editorial article by Professor Bianco (CARBON 65, 2013, 1-6). Six guiding principles are established, and the nomenclature necessary for correctly and systematically defining the different graphene materials is provided:
- Graphene sheet or monolayer graphene sheet: A single-atom-thick sheet with a hexagonal arrangement having sp2-bonded carbon atoms.
- Graphene microsheet: this conforms to the preceding definition, and its use is recommended for cases where the lateral size is between 100 nm and 100 µm.
- Bilayer/trilayer graphene: two-dimensional materials made up of 2 or 3 layers.
- Multilayer graphene: made up of between 2 and about 10 layers of graphene.
- Few-layer graphene: made up of between 2 and 5 layers of graphene.
- Graphite nanoparticles or nanosheets: materials with a graphitic arrangement having a dimension of less than 100 nm (which can be the thickness or the lateral size).
- Exfoliated graphite: Material obtained by partial exfoliation of graphite or graphite intercalation materials (thermal, mechanical or chemical), with a 3D structure (thickness greater than 10 layers).
- Graphene oxide (GO): graphene chemically modified by means of massive oxidation of the plane; being a single-layer material with a high oxygen content. The C/O atomic ratio can be close to 2 (or up to 3).
- Multilayer graphene oxide: this name is proposed for materials in which reaggregation of the sheets or complete exfoliation occurs; considering a maximum of 10 sheets.
- Graphite oxide: material in which the sheets have been modified and functionalised, increasing the spacing between them. This material can be partially delaminated to obtain few-layer or completely exfoliated graphene oxide until arriving at graphene oxide. Graphene and graphite oxides are characterised by presenting an X-ray diffraction peak different from the rest, (001) compared to (002) of reduced or pristine graphene and graphite oxides.
- Reduced graphene oxide (rGO): the material obtained after applying reduction processes (which may be thermal, chemical, photochemical, microwave or microorganism-based treatments).
- Functionalised graphene materials. For decorations or functionalisations of this type, including the type of molecule that functionalises it is proposed. For example: reduced graphene oxide microsheet functionalised with aminopropylsilane.

Thus, for example a reduced graphene oxide with a mean layer number of 7 will be referred to as multilayer reduced graphene oxide and if the mean layer number is comprised between 2 and 5, it will be referred to as few-layer reduced graphene oxide.

The graphene materials have a very high aspect ratio because they have a very small thickness, comprised between 0.35 nm for a monolayer graphene or a monolayer reduced graphene oxide, and a maximum thickness of 10 nm, which a multilayer graphene oxide may present. The lateral size is usually small, for example for materials produced by exfoliation in liquid medium, such as those developed, for example, by Professor Coleman (Nature Materials 2014, 13, 624-630); to very large, such as the AVA18 graphene material, for example, in "Application of graphene-based flexible antennas in consumer electronic devices" Materials Today, 2018, doi.org/10.1016/j.mattod.2018.01.007. The aspect ratio is calculated by dividing the mean lateral size by the mean thickness.

As discussed, there are other related materials that are thicker such as graphite oxide, having more than 10 layers, or the so-called graphene or graphite nanosheets, having a mean thickness greater than 3.5 nm and therefore more than 10 layers.

Another publication from 2014 entitled "Classification Framework for Graphene-Based Materials". Angew. Chem. Int. Ed. 2014, 53, 7714 - 7718, proposes a model for classification according to three characteristics of the material: Layer number, Mean lateral size, C/O atomic ratio.

The lateral size is the size in the graphene plane. A larger lateral size will produce better interaction with the matrix. The lateral size of the graphene material can be measured using several techniques, both in powder and in a processed sample, for example in solution. However, this processing of the sample may alter it, leading to an incorrect characterisation thereof. For these reasons, the use of solid sample laser diffraction is a tool for the characterisation thereof. Percentiles are used in measurements of this type, with the most common percentile being D50, which relates to the value of the particle size for which 50 % of the distribution is of a smaller size.

Most studies have demonstrated that adding rigid loads, such as inorganic filler loading for example, leads to the decrease of certain mechanical and rheological properties of polymers when compared with the pure polymer. The properties that are decreased are usually the melt flow rate, stretch (elongation) and impact. This is because since the loads (fillers) are rigid, they lead to restrictions in the rearrangement of the polymer chains of the matrix and transfer this rigidity to the polymer, leading to a decrease in stretch and impact resistance, also increasing molten state viscosity, whereby the melt flow rate decreases.

The impact toughness of plastics can be improved by means of adding impact modifiers. Furthermore, plasticisers are used to improve the melt flow rate and stretch.

To improve stretch, plasticisers, most of which are organic compounds, Handbook of Plasticizers (Third Edition), George Wypych, ISBN: 978-1-895198-97-3, or compounds of a natural origin, European Polymer Journal 2011, 47, 254-263, are used. Graphene materials such as graphene oxide or functionalised materials have lubricating characteristics as described, for example, in CN105112124 or in Tribol Lett 2014, 56, 133-142.

Impact modifiers are usually elastic materials that can efficiently absorb loads, usually because they have a long flexible chain in their structure. In Plastics, Additives and Compounding 2004, 6, 46-49 and in Greco R. (1998) "Impact modifiers: (1) mechanisms and applications in thermoplastics". Pritchard G. (eds) Plastics Additives. Polymer Science and Technology Series, vol 1. 978-94-010-6477-4, alternatives for a large number of thermoplastics and the mechanisms associated with improved impact resistance are described. Examples of formulations of thermoplastic materials with impact modifiers are polymer mixtures, often a rigid thermoplastic and an elastomer, some of the formulations more used in the industry being PP-EPDM or HIPS, which are modified polystyrene with elastomer materials. Also, mixtures with other polyolefins are used to improve impact resistance. Examples of this type of modification have been described in the literature for several decades (Morphological study on the effect of elastomeric impact modifiers in polypropylene systems. Polymer 1979, 20, 37-43, or in CN106832583)

Examples of the use of nanomaterials in improving the impact both in mixtures and in thermoplastics have also been described. US6060549A describes the use of exfoliated clays to improve mechanical properties, including impact resistance. The Journal of Applied Polymer Science, 2004, 92, 2714-2723 describes the improved impact resistance using n-CaCO3 both in PVC and in PVC-chlorinated polyethylene.

Other loads such as nanoclays and silicates of various morphologies are known and used in a wide range of polymers to improve mechanical properties. Polymer, 2004, 45.2321-2331 describes for PA6 significant increases in modulus using montmorillonite and modifications thereof, although a decrease in stretch and impact resistance occurs when the load percentage is increased, which is attributed to a deficient load-matrix interaction, the dispersion of particles and the rigidity of the particle; this effect is observed in both micro- and nanocomposites. It should be pointed out that the chemistry of the polymer-load interface is key to obtaining a composite with good mechanical properties.

Different or related graphene materials have been used to improve mechanical properties; however, the incorporation of these materials causes a decrease in stretch, for example, POLYM. COMPOS., 2016, 37, 1572-1576 describes how stretch is lost when materials derived from graphene in a PVC matrix are incorporated; Polymer 20111, 52, 4001-4010 describes the nil effect for very low loads and a drastic drop when the concentration thereof is increased for PP composites; and Vacuum 2016, 130, 63-71 describes a decrease in the melt flow rate in the case of LDPE; Macromolecular Research 2014, 22, 983-989 describes this decrease when the matrix is polyimide, and International Journal of Composite Materials 2016, 6, 172-182 describes same for polyvinyl alcohol-gelatin. AIP Conference Proceedings 1914, 150001 (2017); doi: 10.1063/1.5016778 describes how the incorporation of some types of graphene materials cause a sharp drop in both impact resistance and stretch at break.

In these materials, the aspect ratio is low and the compatibility and interaction with the matrix is very limited, which on one hand hinders obtaining a good dispersion, leading to agglomerates and the loss of properties such as stretch (elgongation) at break, impact resistance and also leading to an increase in viscosity, and therefore a reduction in the melt flow rate.

### OBJECT OF THE INVENTION

The object of the present invention is to improve the impact resistance, stretch or melt flow rate of thermoplastic materials, of mixtures of thermoplastic materials or of thermoplastic materials reinforced with another type of load (filler) or fibre.

The invention is based on the use of high-aspect-ratio graphene materials as a thermoplastic material load such that it allows increasing at least one of the three characteristics: impact resistance, stretch or melt flow rate

The preparation of the composites is based on technologies currently described in the state of the art, such as melt mixing, reactive extrusion, in-situ polymerisation or solution mixing.

### DESCRIPTION

The most common thermoplastic materials are polyolefins such as polyethylene, polypropylene or polybutylene; polyamides, polystyrenes, polylactic acid, thermoplastic polyurethane, polyvinyl chloride, polyester polyethylene phthalate, polymethyl methacrylate, PTFE, polyoxymethylene, other polyacetals, polycarbonate, polyimides, polyamide-imide, polyetherimide, polyacrylate, polyphenylene sulphide, polyether ether ketone, polyacrylonitrile, polyvinylidene chloride. It is also common to use mixtures thereof, such as PP-EPDM, or to reinforce same using fibres such as, for example, glass fibre-reinforced polyamide 6 or carbon fibre-reinforced polypropylene, or by means of loads such as, for example, polypropylene with talc or calcium carbonate, or polyamides with carbon nanotubes or nanoclays. It is also very common to use reinforced mixtures such as for example the talc-reinforced PP-EPDM.

In certain industrial applications, thermoplastic materials, their mixtures, or reinforced thermoplastic require an improvement to some characteristics, such as stretch (elongation) at break, to prevent breaking upon stretching, or an improvement to impact resistance. For processability, it is necessary to improve the melt flow rate.

Graphene materials are a family of products ranging from pristine graphene to graphene oxide or functionalised materials thereof.

It is fundamental to take into account the polarity of the polymer and the characteristics of the graphene material being used.

Taking into account the lack of polarity of the carbon backbone of graphene, one option is to work with graphene oxide and its derivative products, such as reduced graphene oxide, such that the positions of oxygen in the structure confer certain polarity to the material and, therefore, improve compatibility with the matrix. The functional groups are usually C-OH, COOH, C=O or epoxide-type functional groups.

Graphene materials produced by liquid-phase exfoliation by means of mechanochemical processes or electrochemical exfoliation and these materials functionalised can also be used improve the stretch, impact or melt flow rate in thermoplastic materials. The functional groups are thiols, carboxylic functional groups, phosphonic functional groups, di- or tetrasulphides; amines; chlorosilanes; alkoxysilanes, phosphonates, glycols, ammonium, diamines, triamines, tetramines, sulphosuccinates, aromatic groups, pyridine groups, phthalates or sulphates.

Moreover, compatibility can be improved by means of introducing functional groups. This functionalisation can be covalent and non-covalent depending on the type of bond used, and it can improve both dispersion and compatibility, achieving a better interface, and consequently, better properties such as those herein described.

The aspect ratio of graphene materials is key and, as discussed, will depend on both the thickness and the lateral size. A high aspect ratio will allow the matrix-graphene material interaction to be improved owing to the greater contact surface area.

As discussed, the graphene materials are those which have a mean layer number between 1 and 10; the greatest increase in the mechanical and rheological properties herein described have been observed with these materials. It must be pointed out that these graphene materials have a higher aspect ratio owing to their low thickness. However, for certain materials with higher thicknesses, such as those having from 1 to 20 sheets of mean thickness, an improvement in these properties has been observed, although it is not as high as for materials with a thickness between 1 and 10 graphene layers. Lastly, for materials with a greater thickness, such as one comprised between 1 and 30, a certain improvement in the properties can be observed, but the range of the percentages at which they are obtained are much more restricted.

The graphene materials of the present invention have an aspect ratio of up to 900,000 and the lowest one corresponds to a material produced by exfoliation in liquid medium, with an aspect ratio of 100. The high aspect ratio and low thickness thereof do not hinder the freedom of movement of the polymer chains, and they may also have a lubricating effect, which allows some properties such as the melt flow rate, stretch or impact resistance to be improved. Materials with a very high aspect ratio above 600,000 are very difficult to disperse and process, and the load needed in the polymer materials is low or very low, always less than 2.5 %, and in most thermoplastic polymers, it is less than 0.5 %. Graphene materials with an aspect ratio between 300,000 and 900,000 usually have a very low layer number, between one and three, and a very high lateral size, greater than 100 mm. Materials with lower aspect ratio, such as less than 300,000, are more workable and easier to disperse in the graphene material matrix, such as the one in Example 2 which has a ratio of 70,000; it allows the desired properties to be obtained at higher load percentages, and it allows the expected results and the increase in stretch, melt flow rate or impact resistance to be obtained. Materials with a very low aspect ratio usually have a very high number of particles, which leads to an increase in viscosity and the subsequent decrease in melt flow rate. It is therefore advisable to increase the aspect ratio up to 200, and even above 300 a balance between dispersibility-rheology and properties is usually achieved.

The lateral size of the graphene material used to improve the described characteristics is comprised in the range of between 0.05 micra and 300 micra; when aspect ratios are higher, the optimal lateral size is between 0.1 and 200 micra; and in the case of materials derived from graphene oxide, from reduced graphene oxide or from materials produced by liquid-phase exfoliation, the range is restricted to between 0.25 and 150 micra.

The graphene materials that can be used to improve the stretch, impact resistance or melt flow rate are graphene oxide, few-layer graphene oxide, multilayer graphene oxide, graphite oxide, reduced graphene oxide, few-layer reduced graphene oxide, multilayer reduced graphene oxide, reduced graphite oxide, functionalised graphene oxide, few-layer functionalised graphene oxide, multilayer functionalised graphene oxide, functionalised graphite oxide, functionalised reduced graphene oxide, few-layer functionalised reduced graphene oxide, multilayer functionalised reduced graphene oxide, functionalised reduced graphite oxide, or combinations thereof.

The concentration of the graphene materials as additives for thermoplastic materials to improve these properties can be of between a 0.001 % and the 20 % by weight. Depending on the type of thermoplastic matrix, the surface chemistry originating from functionalisation or from oxidation or reduction processes and the aspect ratio, the improved impact resistance, melt flow rate or stretch are obtained at very low percentages; thus, for example, when the lateral size measured by diffraction laser D50 is above 8 micra, an increase in melt viscosity and a loss of stretch at break and impact resistance are observed after 5 %, so the best properties are obtained at concentrations comprised between 0.001 % and 5 %. For materials having a very high aspect ratio and lateral size D50 greater than 15 micra, and because the interaction with the matrix is very high, it is not necessary for the concentration of the graphene material to be so high, so an improvement in the properties can usually be observed between 0.001 % and 2.5 % of concentration by weight; in some cases in which the aspect ratio and also the lateral size are high, it is necessary to work at lower percentages, less than 0.5 %, as can be observed in Example 3. As discussed, the increase after a concentration percentage leads to the decrease in stretch, melt flow rate or impact resistance, so high concentrations of graphene material are neither advisable nor useful.

The polymer matrix composite using graphene material can be prepared using techniques described in the state of the art, such as by means of in-situ polymerisation, solution mixing, melt mixing or reactive extrusion.

*In-situ* polymerisation consists of mixing the load, in this case graphene material, with the pure monomer, a solution thereof, or one of the components. A suitable initiator is then added and polymerisation begins upon the application of heat, a catalyst or radiation. Solution mixing consists of mixing the load by means of stirring or mechanical shear in the previously dissolved polymer or prepolymer. The graphene material can be readily dispersed in a suitable solvent and mixed with the polymer dispersion. This graphene-polymer suspension can be precipitated using a non-solvent for the polymer or by evaporation. Melt mixing consists of mechanically mixing the polymer in molten state and graphene material in dry powder state or dispersed in a liquid, such as a plasticiser, water or a solvent, for example, applying high shear conditions.

### EXAMPLES

Melt mixing processes have been carried out in a twin-screw extruder, operating in counter-rotating direction. The temperature profile, characteristics of the screws, rotating speed of the screws and the feed devices will depend on the polymer used and also on the graphene material.

Continuous strands are obtained from extrusion, which are cooled and cut to obtain the pellet. The obtained pellet is conditioned if needed, and the specimens needed for each assay are prepared. According to the assays to be performed on each specimen, a type of coupon is necessary, having the dimensions determined by the standard. These coupons are prepared by means of pressure injection in a closed mould.

In the case of measuring the melt flow rate, an extrusion plastometer is used applying standard ASTM D 1238 - 04.

The assays of these examples have been developed in the Graphene Flagship Core 1 European Union H2020 Programme project under grant agreement no. 696656.

### EXAMPLE 1

The graphene material consists of a few-layer reduced graphene oxide (mean thickness less than 2 nm) and having a lateral size of 43 micra D50. It is surface-functionalised with aminosilane groups. The graphene material is melt mixed with Ultramid B3K Polyamide 6.

Dispersions are prepared at several load percentages and the following is characterised:

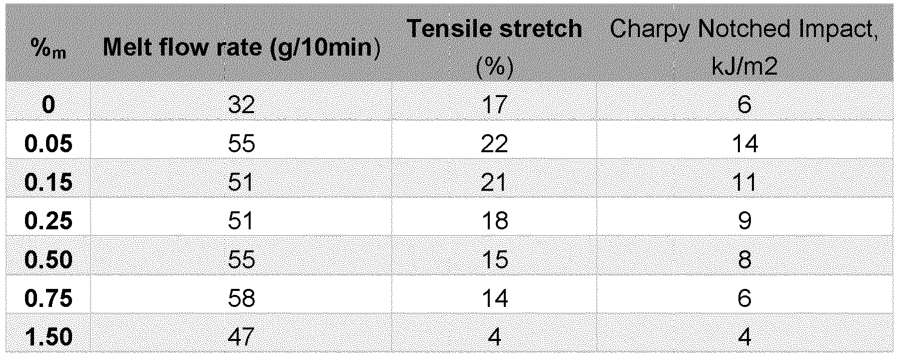

### EXAMPLE 2

The graphene material consists of a few-layer reduced graphene oxide (mean thickness between 1 and 2 nm) and having a lateral size of 71 micra D50. The graphene material is melt mixed with Moplen HP500N Polypropylene.

Dispersions are prepared at several load percentages and the following is characterised:

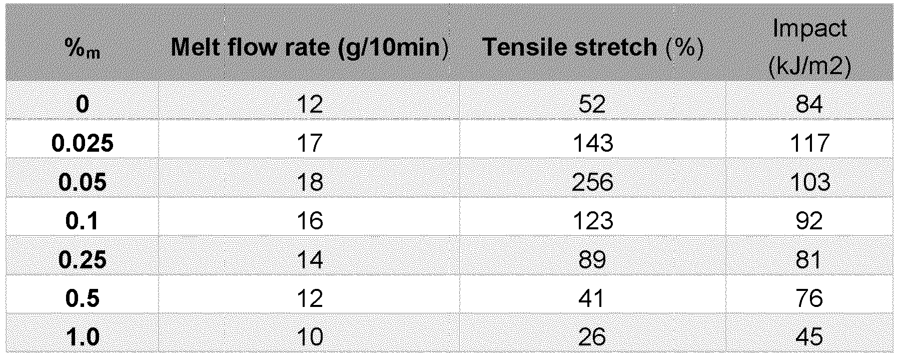

### EXAMPLE 3

The graphene material consists of a few-layer reduced graphene oxide (mean thickness between 1 and 2 nm) and having a lateral size of 40 micra D50. The graphene material is melt mixed with Moplen EP540P Polypropylene.

Dispersions are prepared at several load percentages and the following is characterised:

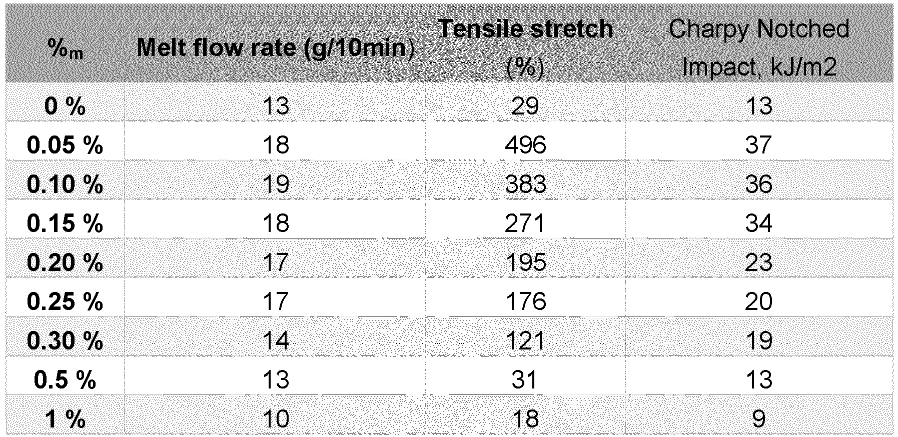

### EXAMPLE 4

The graphene material consists of a few-layer graphene oxide (mean thickness of 2 nm) and having a lateral size of 41 micra D50. The graphene material is melt mixed with Ultramid B3K Polyamide 6.

Dispersions are prepared at several load percentages and the following is characterised:

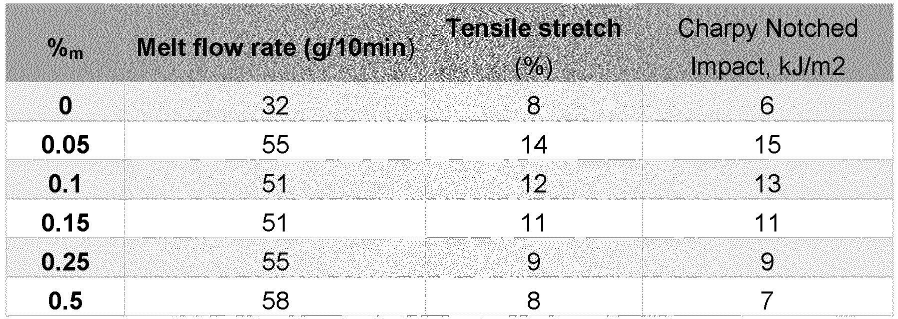

### EXAMPLE 5

The graphene material consists of an AVAPLAT7 multilayer pristine graphene (mean thickness of 3 nm) and having a lateral size of 7 micra D50. The graphene material is melt mixed with Ultramid B3K Polyamide 6.

Dispersions are prepared at several load percentages and the following is characterised:

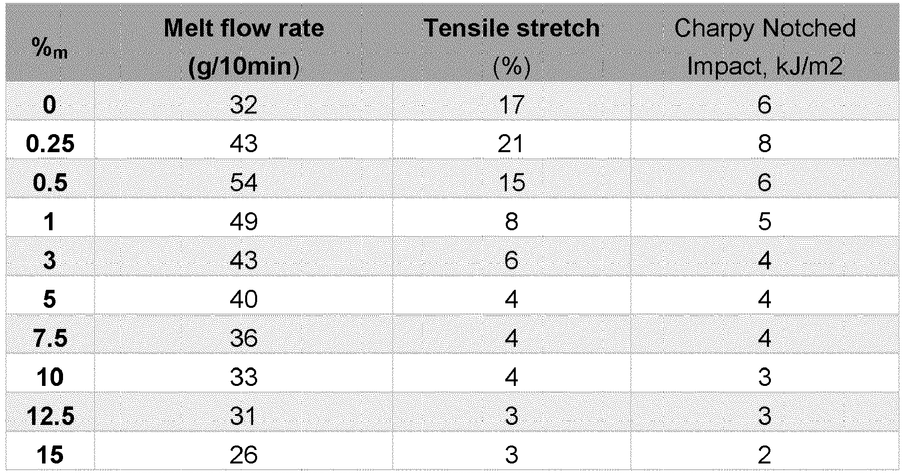

### EXAMPLE 6

The graphene material consists of a few-layer reduced graphene oxide (mean thickness of 2 nm) and having a lateral size of 21 micra D50. The graphene material is melt mixed with PLA 2003D.

Dispersions are prepared at several load percentages and the following is characterised:

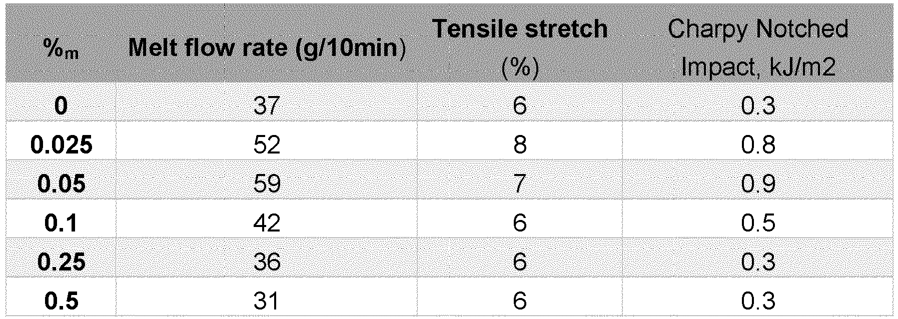

### EXAMPLE 7

The graphene material consists of a few-layer reduced graphene oxide (mean thickness of 2 nm) and having a lateral size of 21 micra D50. The graphene material is solution mixed with Elastollan 688AN TPU.

The TPU is dissolved in DMF and the necessary amount of reduced graphene oxide is dispersed, subjected to ultrasound and mechanically stirred, and the dispersion is precipitated with methanol and dried for 12 hours in an oven at 80 °C. The residue is processed by melt mixing by means of extrusion.

Dispersions are prepared at several load percentages and the following is characterised:

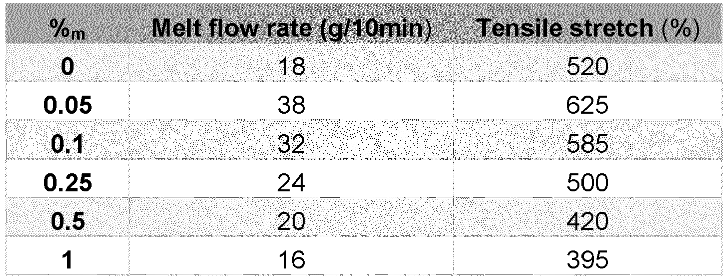

## Claims

1. Use of high-aspect-ratio graphene materials as additives for thermoplastic materials, **characterised in that** it comprises at least one of the following characteristics:
a) improved impact resistance
b) improved stretch
c) improved melt flow rate,
the graphene materials having an aspect ratio comprised between 100 and 900000, and more preferably between 200 and 600000, and even more preferably between 300 and 300000, the graphene materials having a mean layer number between 1 and 30, more preferably between 1 and 20, and even more preferably between 1 and 10.

2. The use of high-aspect-ratio graphene materials as additives for thermoplastic materials according to claim 1, **characterised in that** it comprises improved impact resistance,
the graphene materials having an aspect ratio comprised between 100 and 900000, and more preferably between 200 and 600000, and even more preferably between 300 and 300000, the graphene materials having a mean layer number between 1 and 30, more preferably between 1 and 20, and even more preferably between 1 and 10.

3. The use of high-aspect-ratio graphene materials as additives for thermoplastic materials according to claim 1, **characterised in that** it comprises improved stretch,
the graphene materials having an aspect ratio comprised between 100 and 900000, and more preferably between 200 and 600000, and even more preferably between 300 and 300000, the graphene materials having a mean layer number between 1 and 30, more preferably between 1 and 20, and even more preferably between 1 and 10.

4. The use of high-aspect-ratio graphene materials as additives for thermoplastic materials according to claim 1, **characterised in that** it comprises improved melt flow rate,
the graphene materials having an aspect ratio comprised between 100 and 900000, and more preferably between 200 and 600000, and even more preferably between 300 and 300000, the graphene materials having a mean layer number between 1 and 30, more preferably between 1 and 20, and even more preferably between 1 and 10.

5. The use of high-aspect-ratio graphene materials as additives for thermoplastic materials according to claims 1 to 4, wherein the lateral size of the graphene material is comprised in the range of between 0.05 micra and 300 micra, and more preferably between 0.1 and 200 micra, and even more preferably between 0.25 and 150 micra.

6. The use of high-aspect-ratio graphene materials as additives for thermoplastic materials according to claims 1 to 5, wherein the graphene materials are graphene oxide, few-layer graphene oxide, multilayer graphene oxide, graphite oxide, reduced graphene oxide, few-layer reduced graphene oxide, multilayer reduced graphene oxide, reduced graphite oxide, functionalised graphene oxide, few-layer functionalised graphene oxide, multilayer functionalised graphene oxide, functionalised graphite oxide, functionalised reduced graphene oxide, few-layer functionalised reduced graphene oxide, multilayer functionalised reduced graphene oxide, functionalised reduced graphite oxide, or combinations thereof.

7. The use of high-aspect-ratio graphene materials as additives for thermoplastic materials according to claims 1 to 6, wherein the graphene materials are pristine or almost-pristine graphene, few-layer pristine or almost-pristine graphene, multilayer pristine or almost-pristine graphene, produced by liquid-phase exfoliation by means of mechanochemical processes or electrochemical exfoliation, where said graphenes may be pristine or functionalised.

8. The use of high-aspect-ratio graphene materials as additives for thermoplastic materials according to claims 1 to 7, wherein the functionalisation is based on the functional groups which are C-OH, epoxide, C=O, thiols, carboxylic functional groups, phosphonic functional groups, di- or tetrasulphides; amines; chlorosilanes; alkoxysilanes, phosphonates, glycols, ammonium, diamines, triamines, tetramines, sulphosuccinates, fluorocarbons, aromatic groups, pyridine groups, phthalates or sulphates.

9. The use of high-aspect-ratio graphene materials as additives for thermoplastic materials according to claims 1 to 8, wherein the concentration of the graphene material is comprised in the range of 0.0001 % and 20 % by weight, and more preferably between 0.001 % and 5 % by weight, and even more preferably between 0.005 % and 2.5 % weight.

10. The use of high-aspect-ratio graphene materials as additives for thermoplastic materials according to claims 1 to 9, wherein the thermoplastic materials are polyolefins such as polyethylene, polypropylene or polybutylene; polyamides, polystyrenes, polylactic acid, thermoplastic polyurethane, polyvinyl chloride, polyester polyethylene phthalate, polymethyl methacrylate, PTFE, polyoxymethylene, other polyacetals, polycarbonate, polyimides, polyamide-imide, polyetherimide, polyacrylate, polyphenylene sulphide, polyether ether ketone, polyacrylonitrile, polyvinylidene chloride, or mixtures or composites thereof using loads or fibres, and more preferably they are polyolefins such as polyethylene, polypropylene or polybutylene; polyamides, polystyrenes or mixtures or composites thereof using loads or fibres.

11. A preparation of a polymer matrix composite material using high-aspect-ratio graphene material according to claims 1 to 10, can be prepared using techniques described in the state of the art, such as by means of in-situ polymerisation, melt mixing, reactive extrusion or solution mixing.
